Europäisches Patentamt

European Patent Office

Office européen des brevets

(11) Publication number: **0 342 932**
A1

# EUROPEAN PATENT APPLICATION

(21) Application number: **89304946.0**

(22) Date of filing: **16.05.89**

(51) Int. Cl.4: **B 01 J 20/04**
B 01 D 15/08

(30) Priority: **16.05.88 JP 117096/88**

(43) Date of publication of application:
**23.11.89 Bulletin 89/47**

(84) Designated Contracting States:
**AT CH DE FR GB IT LI SE**

(71) Applicant: **MITSUI TOATSU CHEMICALS,
INCORPORATED
2-5, 3-chome, Kasumigaseki
Chiyoda-ku Tokyo (JP)**

(72) Inventor: **Ishigaki, Kyoichi
Hakuteiryo, 6-2-45, Sakomachi Hikoshima
Shimonoseki-shi Yamaguchi-ken (JP)**

**Nakamura, Akihiko
Mitsui Toatsu Shinwaryo, 7-16, Yatocho 2-Chome
Tanashi-shi Tokyo (JP)**

**Iino, Shinji
4-8-17, Sakomachi Hikoshima
Shimonoseki-shi Yamaguchi-ken (JP)**

(74) Representative: **Harvey, David Gareth et al
Graham Watt & Co. Riverhead
Sevenoaks Kent TN13 2BN (GB)**

(54) **Solid support and column for liquid chromatography.**

(57) A hydroxyapatite containing carbonate groups in a proportion of 0.5-5.0 wt.% calculated as $CO_3$ is disclosed, which can be produced with uniform quality, exhibits excellent pressure resistance of up to at least 500 kg/cm² and is useful as a solid support for liquid chromatography. A column for liquid chromatography packed with this hydroxyapatite at a density of at least 0.5 g/cm³ is disclosed, which is highly suited for the separation of biomaterials by high performance liquid chromatography. The hydroxyapatite is durable and a columns packed with it can be used repeatedly at least 200 times.

EP 0 342 932 A1

## Description

# SOLID SUPPORT AND COLUMN FOR LIQUID CHROMATOGRAPHY

This invention relates to a packing material, namely, a solid support which is composed of a hydroxyapatite containing carbonate groups and is suitable for use in liquid chromatography, and also to a column which is packed with the solid support and is suitable for use in liquid chromatography.

Apatite is a generic term for a wide range of compounds having a composition represented by the following formula (1):

$$M_2^+{}_nM'_m{}^{2+}(ZO_4{}^{3-})_6Y_2^- \qquad (1)$$

wherein M and M' mean independently Ca, Pb, Ba, Sr, Mg, Ni, Na, K, Fe, Al or other metal atom; $ZO_4$ denotes $PO_4$, $AsO_4$, $VO_4$, $SO_4$, $SiO_4$, $CO_3$ or other acid group; Y stands for F, OH, Cl, Br, O, $CO_3$ or other anionic atom or atom group; and the sum of $n$ and $m$ is 10, including $n=0$ and $m=0$.

In the present invention, compounds having a composition of the formula (1) in which M, $ZO_4$ and Y are substantially Ca, $PO_4$ and OH, respectively, will be called "hydroxyapatites". Further, hydroxyapatites whose $ZO_4$ and/or Y have been partly substituted with $CO_3$ will be called "carboxylate-containing hydroxyapatites".

Since hydroxyapatites (hereinafter abbreviated as "HAps") are inorganic compounds having the same chemical composition as natural teeth and natural bones, they have excellent compatibility with biomaterials. Therefore, they are successfully used as solid supports for columns in liquid chromatography (hereinafter abbreviated as "LC") of biopolymers such as proteins, nucleic acids and enzymes for their separation and purification.

The popularization of high performance liquid chromatography (hereinafter abbreviated as "HPLC") in recent years has made it possible to process a small amount of a sample in a short time (microanalysis) and also to process a large amount of a sample at once (mass fractionation). Applications for HAps in these fields are thus expected to spread further. There has hence been a desire for the development of HAps offering still higher performance while permitting easier use, as a solid support for LC columns including HPLC columns.

HAps which have heretofore been used as solid supports for LC columns are generally produced by any one of processes derived with suitable improvements from the wet synthesis process reported by A. Tiselius, et al. in Arch. Biochem. Biophys., 65, 132 (1956), in which a water-soluble calcium salt is reacted with a water-soluble phosphate salt. HAps obtained by one of these processes are presently considered to have excellent performance as solid supports for LC columns. Their physical properties are generally as follows:

Ca/P Ratio: 1.4-1.55

X-Ray diffraction: weak diffraction peaks

$CO_3$ content: less than 0.1 wt.%

However, the conventional HAp-producing processes described above require very cumbersome procedures for the reaction and subsequent processing and/or treatment, such as raw material preparation, pH control, stirring control, temperature control, etc.

Moreover, it is very difficult for these processes to produce HAps with good reproducibility in quality. When these processes are scaled up to an industrial level, the reproducibility is significantly reduced compared to their practice on a small scale. They are hence not suitable for industrial practice. They are accompanied with a further problem that the resultant HAps of the above physical properties cannot retain these physical properties unless stored in a sodium phosphate buffer in a cold place.

As has been mentioned above, it has been difficult to consistently produce an HAp which can exhibit excellent performance as a solid support for LC columns for the separation and purification of biopolymers, by any of the processes known to date. This has led to high HAps prices. Consequently, the frequency of use of HAps as solid supports for LC columns in the separation and purification of biopolymers is currently extremely low compared to other solid supports, and HAps are used in limited fields only.

In addition, HAps do not have sufficient pressure resistance and durability, resulting in limited applications requiring frequent replacement, especially in HPLC.

This invention seeks to solve at least some of the above-described problems of the prior art.

An object of this invention is therefore to provide an HAp which can be produced with uniform quality and at a reduced cost.

Another object of this invention is to provide an HAp which, as a solid support for LC columns including HPLC columns, has improved separation ability for biomaterials in particular. Desirably, the HAp is excellent in pressure resistance and durability.

This invention has sought, therefore, to provide a column suitable for use in LC including HPLC, which has excellent durability and superb separation ability for biomaterials.

These objectives of the invention can be achieved by carbonate-group-containing HAp (carbonate-containing hydroxy-apatite, hereinafter abbreviated as COAp) containing carbonate groups in a proportion of 0.5-5.0 wt.% claculated as $CO_3$.

A solid support according to this invention, which is suitable for use in an LC column, is composed of COAp containing carbonate groups in a proportion of 0.5-5.0 wt.% calculated as $CO_3$. Packing of the solid support in a suitable column provides an LC column according to this invention.

Here, it should be noted that "LC" as an application field of the solid support and column of this invention includes "HPLC".

The invention is now outlined by way of example in the following description.

As has been discussed above, LC or HPLC columns which use a solid support composed of a conventional HAp are accompanied by the problems that they are a little insufficient in separation ability and are inferior in pressure resistance and durability. There is also the serious problem that HAps cannot be produced with good reproducibility in quality. Conventional HAps are inferior in pressure resistance and durability so that they are unable to withstand repeated use in HPLC.

In contrast, the solid support of this invention which is composed of a COAp can be produced with good reproducibility in quality and, moreover, has a high separation ability for biomaterials.

Owing to the high physical strength of COAp crystals, the solid support of this invention is excellent in pressure resistance and durability.

As a result, it is possible to employ a high pressure of up to at least $500 \text{ kg/cm}^2$ as a packing pressure upon packing of the solid support of this invention in a column.

A column packed with the solid support of this invention shows excellent durability when used repeatedly in HPLC.

The solid support of this invention has excellent pressure resistance and can be packed in a column under a high pressure. It can therefore be packed at a density of at least $0.5 \text{ g/cm}^3$ in a column. As a corollary of this, the use of the solid support according to this invention can provide a column which is improved further in the separation ability for biomaterials under developing conditions typical to HPLC.

The conventional HAps have a plate-like crystalline structure, thus they require the cumbersome operation that their packing in HPLC columns has to be conducted while orienting their crystals. A COAp useful in the practice of this invention does not however require such care in packing, thus packing of a column can be conducted with ease. In addition, the flow rate can be controlled by adjusting the packing pressure. This has brought about another advantage that the column requires less developer compared with conventional columns. Furthermore, besides HPLC columns for analyses, columns according to this invention can also be used suitably as fractionating HPLC columns. They can separate and purify a target substance with high purity in a short time.

As a still further advantage of the COAp-composed solid support of this invention for LC and the LC column of this invention packed with the solid support, one is able to use a carbonate-group-contain ing solution which has heretofore been considered unsuitable as an eluent for HAp.

When an eluent containing carbonate groups is caused to pass through an LC column packed with a conventional HAp, the column is clogged rendering further injection difficult. This seems to be attributable to a reaction between carbonate groups and the HAp.

On the other hand, even when an eluent containing carbonate groups is caused to pass through the packed column, no problem arises in the case of the COAp employed in this invention. This may probably be attributed to the fact that the COAp itself contains carbonate groups.

The ability to use an eluent containing carbonate groups brings about the following merits, by way of example.

When fractionation is conducted using a conventional column packed with HAp, a phosphate solution is usually employed as an eluent for a fractionated sample. It is therefore often required to conduct desalting as a post treatment of the elution. In such a case, even when the separation procedure needed only a short time, the overall time was by no means considered short if the time for the post treatment was included. An eluent of the volatile carbonate salt type, which has heretofore been considered unsuitable, is usable as an eluent for the COAp-composed solid support of this invention. There is hence a still further merit that the time for the post treatment can be shortened substantially. This advantage is effective especially upon separation and purification of nucleic acids.

Upon separation and purification of plasmid DNA as an exemplary nucleic acid, ethanol is finally added to a collected fraction subsequent to the separation, so that the nucleic acid is precipitated for recovery and storage. However, this procedure requires desalting of a phosphate salt as a pretreatment in the case of a solution containing the phosphate salt, because the phosphate salt also occurs and precipitates. If a volatile salt is used here, its precipitation and separation are however feasible by direct addition of ethanol so that the total processing time is reduced significantly.

The term "desalting" as used herein means dialysis. When phosphoric acid is used as an eluent, 15-24 hours are generally required for this processing. This desalting can however be completed in a very short time, not longer than 1 hour in this invention, because this invention allows use of an eluent of the carbonate salt type. Use of this eluent of the carbonate salt type becomes more effective by the use of an apatite containing carbonate groups such as a COAp.

As has been described above in detail, the various effects can be brought about from the use of a COAp in a solid support for LC and HPLC columns. These effects of the present invention are extremely economically significant.

The invention will now be described in further detail by way of example, with reference to the accompanying drawings in which

FIG. 1 and FIG. 3 are X-ray diffraction patterns of COAps according to this invention, which were obtained in Production Example 1 and Production Example 2, respectively;

FIG. 2 and FIG. 4 are infrared absorption spectra of the COAps obtained in Production Example 1 and Production Example 2, respectively;

FIG. 5 is an infrared absorption spectrum of an HAp obtained in Comparative Production Example 1;

FIG. 6 and FIG. 7 are chromatograms obtained by development of bovine serum albumin on HPLC columns in Example 1 and Example 2, respectively;

FIG. 8 and FIG. 9 are chromatograms obtained by development of bovine serum albumin on LC columns in Example 3 and Example 4, respectively;

FIG. 10 is a chromatogram obtained by development of nucleic acids on an HPLC column in Example 11;

FIG. 11 is a chromatogram obtained by development of bovine serum albumin on an LC column in Comparative Example 1; and

FIG. 12 is a chromatogram obtained by development of bovine serum albumin on an LC column in Comparative Example 2;

## Detailed Description of the Preferred Embodiments

Solid supports according to this invention for LC are composed of a COAp which contains carbonate groups in a proportion of 0.5-5.0 wt.% calculated as $CO_3$. The particle size of the COAp may preferably be in a range of from 0.5 μm to 50 μm, with a range of from 2 μm to 15 μm being more preferred. In addition, the specific surface area of the COAp, as measured by the BET method, may preferably be 50 $m^2$/g or smaller. COAps having such characteristics can exhibit various excellent performances as solid supports for LC such as those described above.

Contents of carbonate groups to be described in this invention have been obtained by converting, into $CO_3$ contents, data of anhydrous carbonic acid ($CO_2$) measured in accordance with the phosphor mineral analysis established by the Technical Committee, Japan Phosphatic & Compound Fertilizers Manufacturers' Association.

No particular limitation is imposed on the process for producing a COAp useful in the practice of this invention, and any one of processes known to date can be used. It can therefore be obtained by any process, for example, a process in which dibasic calcium phosphate and calcium carbonate are reacted in aqueous ammonia, a process in which dibasic calcium phosphate dihydrate and calcium carbonate are reacted in water, or a process in which phosphoric acid and/or the calcium salt thereof and calcium carbonate are reacted in a reaction medium containing an organic solvent.

To obtain good separation ability, a COAp employed in this invention must however contain carbonate groups in a proportion of 0.5-5.0 wt.% calculated as $CO_3$. In this invention, the COAp can therefore be obtained by reacting phosphoric acid and/or the calcium salt thereof and calcium carbonate at a molar ratio such as that to be described below in a reaction medium such as aqueous ammonia, water or an organic solvent.

Namely, any one of aqueous ammonia, water and organic solvents is charged as a reaction medium into a reaction vessel, followed by the addition of phosphoric acid and/or the calcium salt thereof and calcium carbonate. They are reacted by heating the reaction medium usually under atmospheric pressure and refluxing the evaporated reaction medium. The above reaction is conducted by setting the ratio of phosphoric acid and/or the calcium salt thereof to calcium carbonate within a range of 1.30-1.90, preferably, 1.45-1.75 in terms of atomic ratio of calcium to phosphorus, i.e., Ca/P and the ratio of carbonate groups to phosphorus within a range of 0.015-1.90 in terms of $CO_3/PO_4$. Regarding the reaction time, about 5-8 hours are needed where the medium is aqueous ammonia or water. Where the reaction medium contains an organic solvent, the reaction can be brought to completion in a period as short as about 2 hours.

Since the thus-formed COAp is in a slurry form after completion of the heating, it is only necessary to collect it by filtration and then to dry same by methods known per se in the art.

The Ca/P atom ratio in a COAp is theoretically 5/3. Upon reaction of calcium and phosphor, their optimal ratio should therefore be 5/3 ≑ 1.67. So long as the atom ratio falls within the above range upon conducting the actual reaction, a COAp can be synthesized successfully.

The actually-measured Ca/P atom ratio of a synthesized COAp may preferably fall within a range of 1.60-1.70.

As the phosphoric acid and/or its calcium salt usable as a raw material in the above reaction, it is possible to use $H_3PO_4$, $H_4P_2O_7$, $HPO_3$, $P_2O_5$, $Ca(H_2PO_4)_2 \bullet H_2O$, $Ca(PO_3)_2$, $CaHPO_4$, $CaHPO_4 \bullet 2H_2O$, $Ca_2P_2O_7$, $Ca_3(PO_4)_2$, $Ca_8H_2(PO_4)_6 \bullet 5H_2O$ and/or the like. However, these compounds merely constitute a representative listing of raw materials usable in the present invention. It is therefore not necessary to limit the usable raw materials to those given by way of example above. In addition, it is unnecessary to use products of particularly high purity as these compounds. Usually, commercial products of industrial grade can be used successfully. Similarly, an industrial grade product is also sufficient as the other raw material, calcium carbonate.

As a calcium source, it is possible to use, besides such calcium phosphates as described above, calcium oxide and hydroxide and the calcium salts of inorganic and organic acids, such as CaO, $Ca(OH)_2$, $CaCl_2$, $Ca(NO_3)_2$ and $(CH_3COO)_2Ca$.

In addition, as a carbonate group source, calcium carbonate is used in this invention because it can also replenish calcium atoms. No problem or inconvenience will however arise even when a carbonate salt such as $K_2CO_3$, $KHCO_3$, $Na_2CO_3$, $NaHCO_3$, $(NH_4)_2CO_3$ or $NH_4HCO_3$ or carbon dioxide gas is used.

4

In this invention, it is only necessary to choose at least one of phosphoric acid and its calcium salts, such as those mentioned above, and then to charge it together with calcium carbonate at a Ca/P atom ratio of 1.30-1.90, preferably 1.45-1.75, into a reaction vessel. It is possible to adjust the content of carbonate groups in a COAp, which is to be formed, by changing the amount of calcium carbonate to be charged. In this manner, the content of carbonate groups can be controlled within a range not greater than 7.0 wt.% calculated as $CO_3$.

Although the $CO_3$ content can be controlled up to 7.0 wt.% from the standpoint of production technology, $CO_3$ contents greater than 5.0 wt.% result in lowered separation performance as solid supports for LC and are hence not preferred.

In this invention, the appropriate amount of a reaction medium used for the production of a COAp varies depending on the type of the medium, the kinds of raw materials for the reaction, the degree of stirring during the reaction, etc. It is however preferred to use the reaction medium in such an amount to give a slurry density of 5-60 wt.% under any conditions.

When aqueous ammonia is used as a reaction medium upon production of a COAp in this invention, it is preferable to use aqueous ammonia whose concentration falls within a range of 5-28 wt.%. On the other hand, examples of the organic solvent usable as a reaction medium may include aromatic and aliphatic hydrocarbons such as benzene, toluene, xylene, pentane, hexane, heptane, octane, decane, various petroleum naphthas and industrial gasoline; alcohols such as isobutyl alcohol and n-amyl alcohol; amines such as triethylamine, tributylamine and ethanolamine; ethers, such as diethyl ether and ethyl butyl ether, and various Cellosolves and Carbitols; and ketones such as methyl ethyl ketone and methyl isobutyl ketone. It should however be noted that they are merely illustrative examples of organic solvents usable in the present invention.

A COAp is obtained as aggregates of hexagonal prismatic crystals by the above process. When used as a solid support for liquid chromatography, especially, for high performance liquid chromatography, this COAp exhibits still better performance in the separation and purification of biopolymers compared to the use of conventional HAps.

In one aspect of this invention, a column is packed with the COAp to form an LC column. As a method for packing the column with the COAp, it is possible to follow the conventionally-known wet packing method (slurry method) or the like.

The wet packing method includes the equilibrated density technique, non-equilibrated technique, high viscosity technique, etc. It is only necessary to choose a preferred packing technique from these techniques as needed, taking into consideration the particle size and/or physical strength of the COAp as a solid support.

To pack the column with the COAp, a packing vessel called "packer" and a high-pressure pump are needed. Further, a packing solvent is used for the packing. It is desirable to pour the COAp, as a 1-20 wt.% slurry in the solvent, into the packer and then pack it under a constant pressure in a range of 70-350 kg/cm². 

As illustrative examples of the packing solvent, there may be mentioned tetrabromoethane, tetrachloroethylene, carbon tetrachloride, methyl alcohol, ethyl alcohol, n-propyl alcohol, isopropyl alcohol, water, acetone, dioxane, chloroform, tetrahydrofuran, cyclohexanol, ethylene glycol and the like. These solvents may be used either singly or in combination.

The material, shape and size of the column to be packed with the solid support of this invention can be selected depending on the intended use of the resulting column.

Regarding the size of the column, the solid support of this invention can be applied to various columns ranging from microanalysis columns having an inner diameter as small as 1 mm or so to fractionation columns having an inner diameter as large as at least 100 mm.

In the case of HPLC columns for example, it is possible to use analysis columns having an inner diameter of about 3 mm and an effective length of about 3 cm, analysis and microfractionation columns having an inner diameter of about 7.6 mm and an effective length of about 10 cm, large fractionation columns having an inner diameter of about 50 cm and an effective length of about 50 cm, etc.

The separation characteristics of COAp-packed columns according to this invention, ranging from such small analysis columns to large fractionation columns, have very little dependency on their sizes.

These columns may be made of a material commonly employed for LC and HPLC columns, namely, stainless steel, glass, resin or the like.

Upon packing an HPLC column with the solid support of this invention, it is preferable to set the packing density at 0.5 g/cm³ or higher because the separation performance can be improved still further.

The upper limit of the packing density is set below such a level that the flow resistance becomes too high to permit smooth injection. Generally, the upper limit is set at about 1.0-1.2 g/cm³.

[Examples]

This invention will hereinafter be described more specifically in the following examples, in which all designations of "%" mean wt.%.

Production Example 1:

Two liters of distilled water, 74 g of $Ca(OH)_2$ powder and 68 g of $CaCO_3$ powder were charged into a separable flask fitted with a stirrer and a reflux condenser and having an effective capacity of 3 ℓ. After adding under stirring 200 mℓ of a 40% aqueous solution of $H_3PO_4$ over 15 minutes, the contents were heated and reacted under reflux (at about 98°C) for 5 hours.

After completion of the reaction, the reaction product was cooled, collected by a pressure filter, washed with water, and then dried at 130°C for 16 hours to obtain 83 g of white powder.

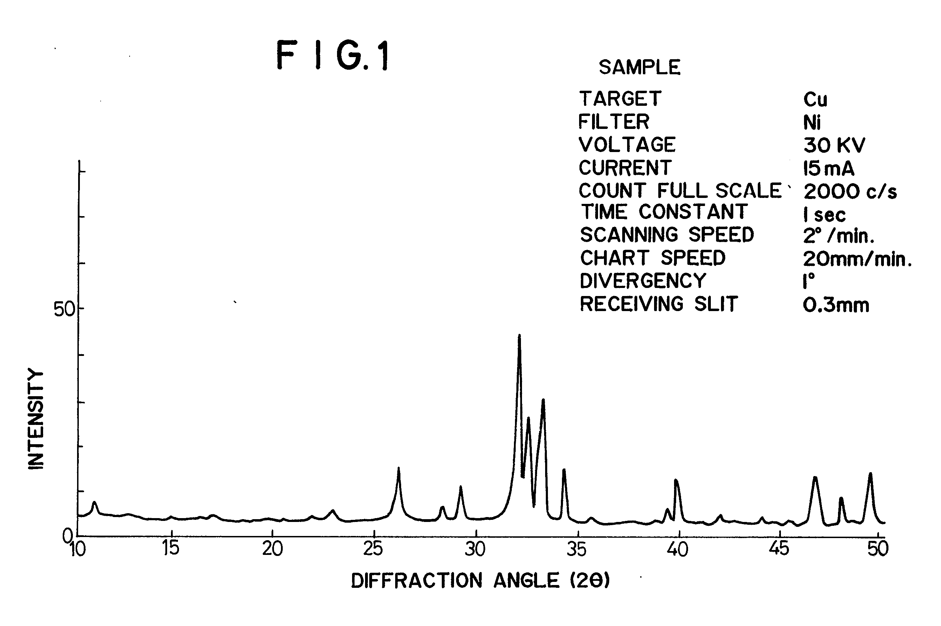

An X-ray diffraction pattern of the powder is shown in FIG. 1.

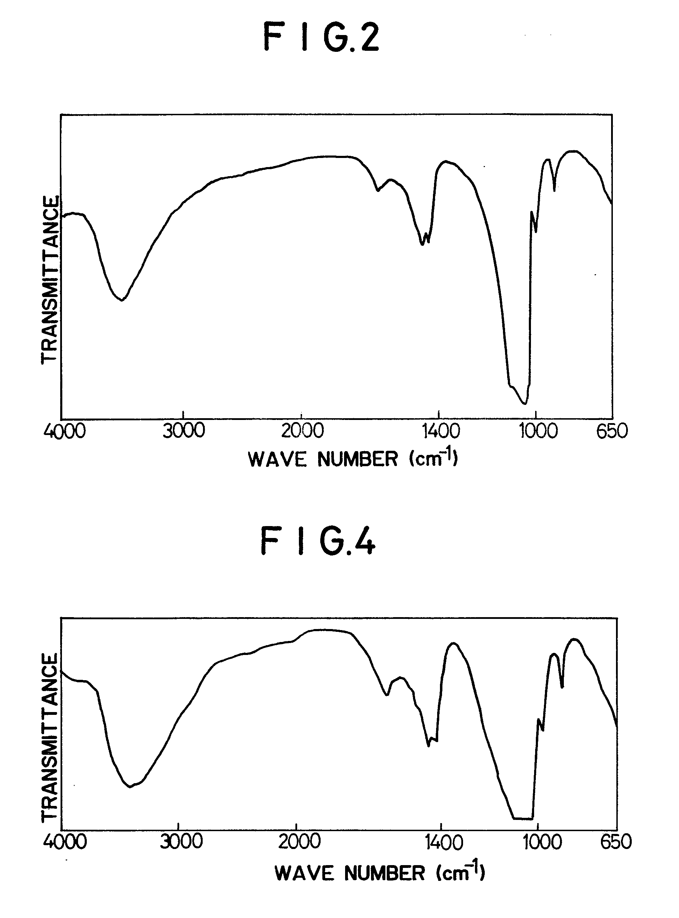

As is apparent from FIG. 1, the X-ray diffrac tion pattern contains main peaks at $2\theta$ ($\theta$: angle of diffraction) = 31.7, 32.2 and 32.8, respectively. They are consistent with the characteristic diffraction peaks of COAp described in ASTM Card 9-432. In addition, its infrared absorption spectrum is given in FIG. 2. As clearly shown in FIG. 2, C-O absorption peaks are observed near 1450 cm$^{-1}$ and 870 cm$^{-1}$ respectively. The analysis results of physical properties of the COAp are shown in Table 1.

The $CO_3$ content was measured by the method described above, the CaO content and $P_2O_5$ content were measured by EDTA chelatometry and cholorimetry, respectively, and the specific surface area was measured by the BET method.

Production Example 2:

Aqueous ammonia of 28% concentration was added to 1 $\ell$ of an aqueous solution in which 83.6 g of $Ca(NO_3)_2$ powder was dissolved, whereby the pH of the solution was adjusted to pH 10. The resultant solution was charged into the separable flask used in Production Example 1, followed by thorough stirring.

Added next gradually at a rate of 5-10 m$\ell$/min to the aqueous solution was 1 $\ell$ of an aqueous solution of 39.6 g of $(NH_4)_2HPO_4$ powder and 11.9 g of $NH_4HO_3$ powder. The resultant mixture was thereafter heated under stirring and reacted under reflux (at about 98°C) for 5 hours.

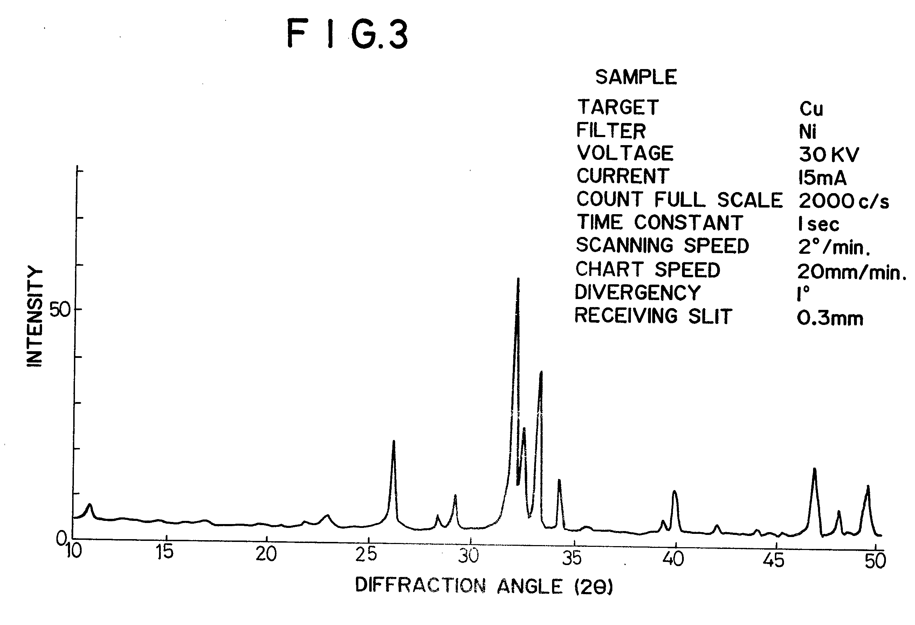

After completion of the reaction, the reaction product was collected by filtration and dried in a similar manner as in Production Example 1, thereby obtaining 38 g of white powder. An X-ray diffraction pattern of the powder is shown in FIG. 3.

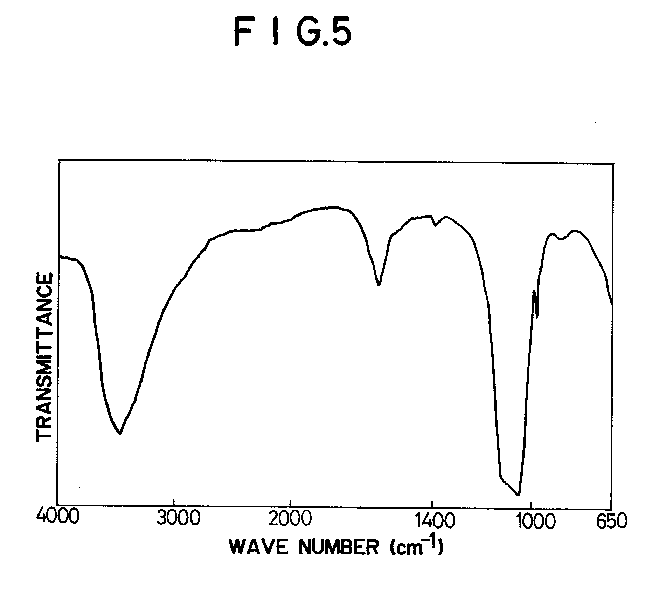

As clearly envisaged from FIG. 3, the angles of diffraction in the X-ray diffraction pattern have the same main peaks as in FIG. 1 so that the reaction product can be identified as COAp. In addition, its infrared spectrum is shown in FIG. 4. As is apparent from FIG. 4, C-O absorption peaks similar to FIG. 2 are observed. The analysis results of physical properties of the COAp are also given in Table 1.

Production Example 3:

$Ca(H_2PO_4)_2 \cdot H_2O$ (75.6 g), $CaCO_3$ (70.0 g), water (100 g) and n-hexane (350 g) were charged into a separable flask fitted with a stirrer and a reflux condenser and having an effective capacity of 1 $\ell$. Under stirring, the contents were heated, and reacted for about 2 hours at temperatures not higher than the reflux temperature (63°C). Water and h-hexane in the separable flask were thereafter caused to evaporate, and while adding to the system n-hexane in a volume equal to the n-hexane and water distilled out, heating was conducted. As the operation proceeded, the internal temperature of the separable flask increased. When the internal temperature had exceeded 68°C, the heating was stopped and the reaction product was collected by filtration and dried in a similar manner as in Production Example 1 to obtain white powder.

The white powder was identified as a COAp by X-ray diffraction and infrared absorption spectrum as in Production Example 1.

Production Example 4:

$CaHPO_4$ (81.6 g), $CaCO_3$ (40.0 g), water (200 g) and 28% aqueous ammonia (10 g) were charged into the separable flask used in Production Example 3, followed by thorough stirring. Under stirring, the contents were heated and then reacted at a temperature of 80-100°c for 5 hours.

'fter completion of the reaction, the reaction product was collected by filtration and dried in a similar mann as in Production Example 1 to obtain 110 g of a COAp in the form of white powder. The analysis results of physical properties of the COAp are also given in Table 1.

Production Examples 5-8:

Under the conditions shown in Table 2, powders of $Ca(H_2PO_4)_2 \cdot H_2O$, $CaHPO_4 \cdot 2H_2O$, $CaHPO_4$ and $CaCO_3$, water and organic solvents were charged into separable flasks selectively. In a similar manner as in Production Example 1, except for the conditions given in Table 2, white powdery COAps were separately obtained in their respective amounts given in Table 2. The analysis results of physical properties of the COAps are shown in Table 1.

Production Example 9:

Production Example 2 was scaled up by 50 times to confirm the reproducibility of the process. Namely, aqueous ammonia of 28% concentration was added to 50 $\ell$ of an aqueous solution containing 4.18 kg of $Ca(NO_3)_2$ powder dissolved therein, thereby adjusting the pH of the aqueous solution to 10. The resultant solution was charged into a reaction vessel made of stainless steel, having an effective capacity of 50 $\ell$ and fitted with a stirrer and a reflux condenser, and the solution was stirred well.

Added next gradually at a rate of 250-500 m$\ell$/min to the aqueous solution was 50 $\ell$ of an aqueous solution which contained 1.98 kg of $(NH_4)_2HPO_4$ powder and 595 g of $NH_4HCO_3$ powder, both dissolved therein. The procedure of Production Example 2 was thereafter repeated similarly to obtain a white powdery COAp in the amount given in Table 2. Physical properties of the COAp are shown in Table 2.

6

Comparative Production Example 1:

Following the conventional process proposed by A. Tiselius et al. in Arch. Biochem. Biophys., 65, 132 (1956), an HAp was synthesized in a manner to be described below.

Into a flask having an effective capacity of 3 ℓ, 1 ℓ of a 0.5 mol/ℓ aqueous $CaCl_2$ solution and 1 ℓ of a 0.5mol/ℓ aqueous $Na_2HPO_4$ solution were simultaneously added dropwise at a rate of 120 droplets per minute and were reacted while being stirred gently by a stirring rod. After completion of the dropwise addition, the supernatant was removed by decantation. The remaining precipitate was washed 4 times with 2 ℓ portions of distilled water, respectively. The precipitate was next added with 2 ℓ of distilled water and further with 50 mℓ of a 40% aqueous NaOH solution, followed by boiling for 1 hour.

After cooling the reaction mixture, the supernatant was again removed by decantation. The precipitate was again washed 4 times with 2 ℓ portions of distilled water. A sodium phosphate buffer of pH 6.8 and 0.01 mol/ℓ concentration (2 ℓ) was then added, and the resultant mixture was heated to a temperature right below the boiling point. That procedure was repeated twice, setting the boiling time to 5 minutes and 15 minutes, respectively. A sodium phosphate buffer of pH 6.8 and 0.01 mol/ℓ concentration (2 ℓ) was then added, and the resultant mixture was boiled twice (for 15 minutes, each) to obtain 36 g of an HAp as shown in Table 1.

The HAp thus obtained was placed in a sodium phosphate buffer of pH 6.8 and 0.001 mol/ℓ concentration and then stored in a refrigerator.

The HAp thus obtained had the physical properties shown in Table 1. Its infrared absorption spectrum is shown in FIG. 5. As is apparent from FIG. 5, the absorption peaks characteristic to carbonate groups (C-O) (near 1450 $cm^{-1}$ and 870 $cm^{-1}$) are not observed.

Table 1

| | Production Examples | | | | | | | | | Comparative Production Example 1 |
|---|---|---|---|---|---|---|---|---|---|---|
| | 1 | 2 | 3 | 4 | 5 | 6 | 7 | 8 | 9 | |
| CaO content (%) | 51.8 | 53.8 | 53.0 | 53.5 | 52.4 | 52.6 | 54.4 | 53.0 | 53.5 | 50.5 |
| $P_2O_5$ content (%) | 40.2 | 42.1 | 42.2 | 42.4 | 40.5 | 39.8 | 42.0 | 42.0 | 42.2 | 42.4 |
| Ca/P atom ratio | 1.63 | 1.62 | 1.60 | 1.60 | 1.64 | 1.68 | 1.64 | 1.60 | 1.60 | 1.51 |
| X-ray diffraction peaks | Strong | Strong | Strong | Strong | Strong | Strong | Strong | Strong | Strong | Weak |
| Specific surface area ($m^2/g$) | 12.3 | 9.6 | 8.2 | 8.0 | 45.6 | 9.8 | 9.3 | 8.0 | 9.1 | 128.0 |
| Yield (g) | 83 | 38 | 119 | 112 | 103 | 118 | 109 | 110 | 5620 | 36 |
| Determination of presence or absence of $CO_3$ by IR spectrum | Present | | | | | | | | | Absent |
| $CO_3$ content (%) | 0.91 | 2.14 | 4.03 | 2.73 | 3.62 | 2.85 | 2.93 | 3.94 | 2.02 | 0.01 |

EP 0 342 932 A1

Table 2

| | Production Example 3 | Production Example 5 | Production Example 6 | Production Example 7 | Production Example 8 | Production Example 9 |
|---|---|---|---|---|---|---|
| $Ca(H_2PO_4)_2 \cdot H_2O$ | 75.6 | - | - | - | 75.6 | - |
| $CaHPO_4 \cdot 2H_2O$ | - | 103.2 | - | 103.2 | - | - |
| $CaHPO_4$ | - | - | 81.6 | - | - | - |
| $CaCO_3$ | 70.0 | 40.0 | 40.0 | 40.0 | 70.0 | - |
| $Ca(NO_3)_2$ | - | - | - | - | - | 4175 |
| $(NH_4)_2HPO_4$ | - | - | - | - | - | 1980 |
| $NH_4HCO_3$ | - | - | - | - | - | 595 |
| Water | 100 | 100 | 100 | 100 | 100 | - |
| n-Hexane | 350 | - | - | - | - | - |
| Methyl isobutyl ketone | - | 400 | - | - | - | - |
| Xylene | - | - | 400 | - | - | - |
| Glycosolve DIP* | - | - | - | 400 | - | - |
| Isopropyl alcohol | - | - | - | - | 400 | - |
| Refluxing temperature (°C) | 62 | 87 | 97 | 105 | 90 | - |
| Dewatering completion temperature (°C) | 68 | 116 | 140 | 198 | 98 | - |

(The rows from $Ca(H_2PO_4)_2 \cdot H_2O$ through Isopropyl alcohol are grouped under the label "Charge (g)".)

* Trade name

Examples 1-2:

HPLC metal columns having an inner diameter of 7.6 mm and a length of 100 mm were respectively packed with the COAps, which had been obtained in Production Examples 1 and 2, at a pressure of 10 kg/cm$^2$-G by a usual technique, thereby preparing two types of columns. After completion of the packing, each column was mounted on an HPLC apparatus. The packing density was 0.52 g/cm$^3$ in each column.

In order to evaluate the separation ability of each column, development was conducted using as a standard sample a solution containing tryptophan (0.16%), bovine serum albumin (4.6%), lysozyme (2.0%) and cytochrome C (1.0%) in combination. The development was effected by the linear concentration gradient technique, using a 10 mM phosphate buffer (pH 6.8) and a 350 mM phosphate buffer (pH 6.8). The standard sample was injected in an amount of 10.0 $\mu\ell$. On the other hand, the developing pressure was controlled at 7.5 kg/cm$^2$ to give a flow rate of 1 m$\ell$/min.

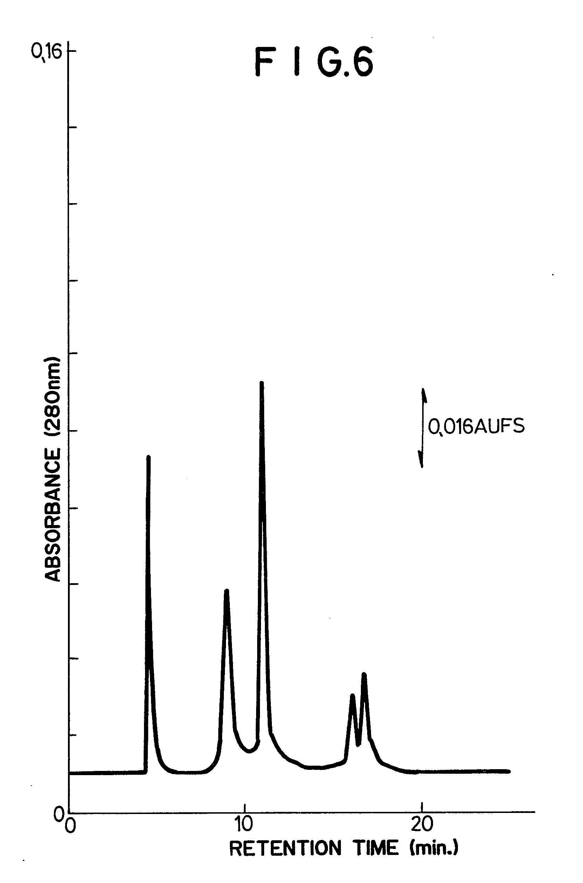

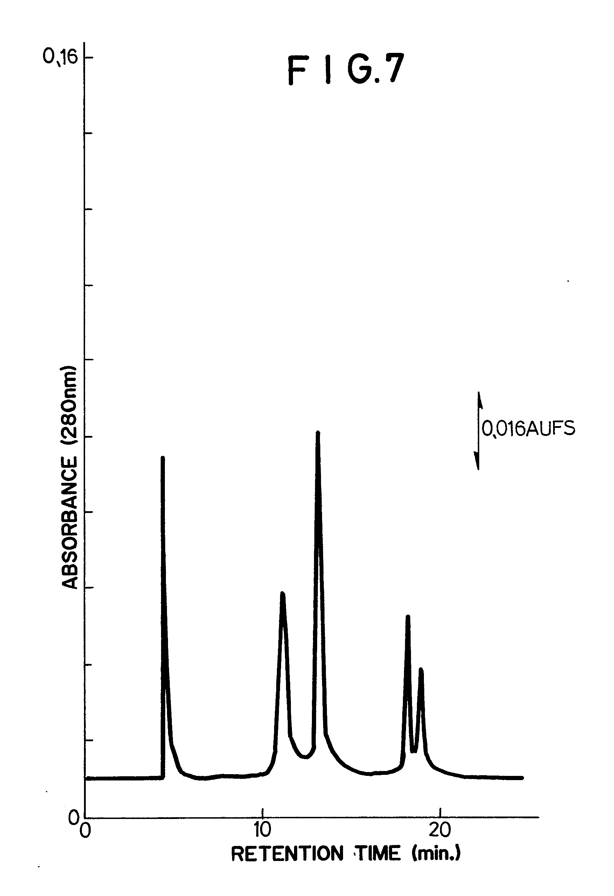

The detection of each protein was conducted by measuring its absorbance at 280 nm. A chromatogram obtained with a column, which contained the COAp obtained in Production Example 1, is shown in FIG. 6, while a chromatogram obtained with a column containing the COAp obtained in Production Example 2 is illustrat ed in FIG. 7. As is apparent from FIG. 6 and FIG. 7, it was observed that the four components in the standard sample were separated completely. The individual peaks were confirmed to correspond respectively to tryptophan, bovine serum albumin, lysozyme and cytochrome C from the left. There are two isomers in cytochrome C so that the peak is separated into two.

Examples 3-4:

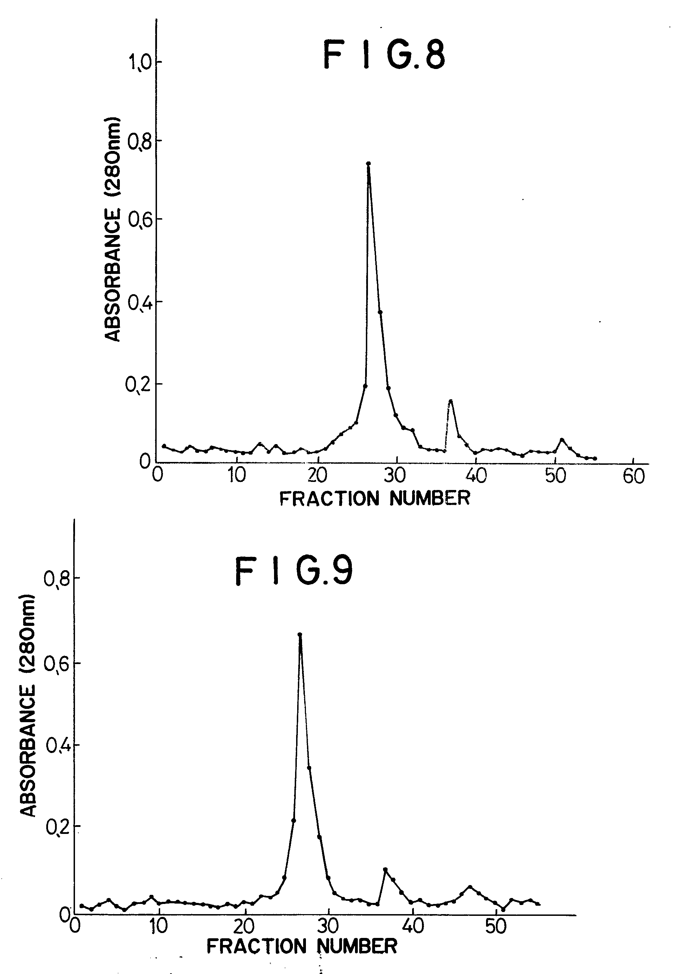

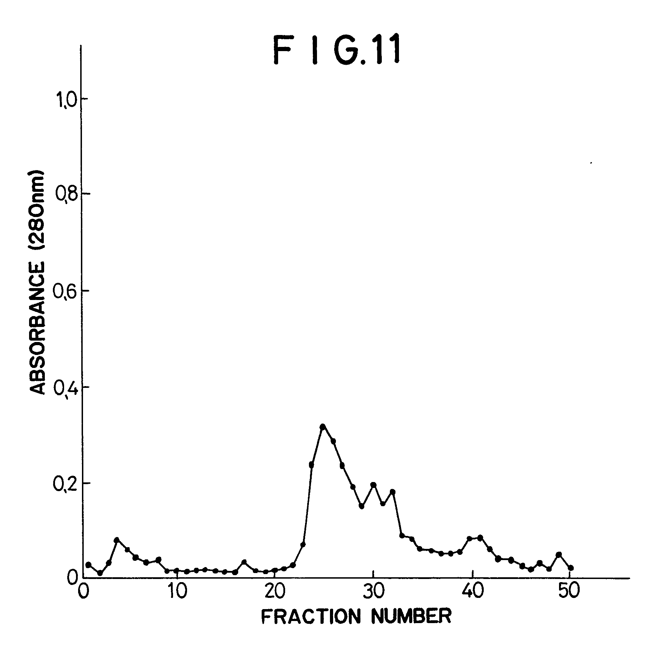

Using the COAps obtained in Production Examples 2 and 9, respectively, the purification of bovine serum albumin was conducted in accordance with the following operation procedure of column chromatography. Namely, 10 g of each COAp was taken in a 500-m$\ell$ beaker, followed by the gentle addition of deionized water (hereinafter reported merely as "water"). The resulting mixture was stirred gently. After allowing the resultant mixture to stand for 10 minutes, it was subjected to decantation. That procedure was repeated further until the supernatant became clear. Thereafter, the COAp was packed as a suspension into a glass column for chromatography (LC) having a diameter of 10 mm (packed height: 100-120 mm). The glass column packed with the COAp was then washed with water, and at the same time the measurement of the flow rate was also conducted (the COAp was packed to give a flow rate of about 10 m$\ell$/hr). One milliliter of a 1% aqueous solution of bovine serum albumin was thereafter caused to pass through the column, whereby the bovine serum albumin was adsorbed on the COAp in the column. Those operations were all performed at room temperature. To elute the thus-adsorbed bovine serum albumin from the column, the column was developed with a sodium phosphate buffer (pH 6.8). The eluate was collected by a fraction collector of the weight fractionation type (2.5 g of the eluate per test tube). The absorbance of the eluate thus obtained was measured in the ultraviolet range, namely, at 280 nm. The results of the separation on the column containing the COAp obtained in Production Example 3 are shown in FIG. 8, while those of the separation on the column containing the COAp obtained in Production Example 9 are depicted in FIG. 9. As is apparent from FIG. 8 and FIG. 9, the use of the solid supports composed respectively of the COAps of this invention gave sharp chromatogram patterns compared to the use of the HAp obtained in Comparative Production Example 1 (see Example 11 and FIG. 11). It is hence understood that the solid supports exhibit superb separation ability and are excellent adsorption and desorption properties.

Example 5:

In a similar manner as in Examples 1 and 2, an HPLC column having an inner diameter of 7.6 mm and a length of 100 mm was packed at a pressure of 10 kg/cm$^2$-G with the COAp obtained in Production Example 3. The resultant HPLC column was thereafter operated in a similar manner as in Examples 1 and 2. The packing density was 0.52 g/cm$^3$. Table 3 shows the results of the operation by the retention time and half-value width of each peak. As is understood from Table 3, the operation gave the same results as the chromatograms obtained in Examples 1 and 2.

Example 6:

An HPLC column having an inner diameter of 7.6 mm and a length of 100 mm was packed at a pressure of 80 k9/cm$^2$-G with the COAp obtained in Production Example 6. The resultant HPLC column was thereafter operated in a similar manner as in Examples 1 and 2. The packing density was 0.60 g/cm$^3$. Similarly to Example 5, the results are shown in Table 3. As is understood from Table 3, the operation gave the same results as the chromatograms obtained in Examples 1 and 2.

Example 7:

Through the column employed in Example 6, the separation of the standard sample was conducted 300 times. Similarly to Example 5, the data of the chromatogram recorded in the 300th operation are shown in Table 3. As is also apparent from Table 3, it is understood that the column according to this invention exhibits good separation ability even in 300 times repeated use and has excellent durability.

Example 8:

An HPLC column having an inner diameter of 7.6 mm and a length of 100 mm was packed at a pressure of 500 kg/cm²-G with the COAp obtained in Production Example 7. The resultant HPLC column was thereafter operated in a similar manner as in Examples 1 and 2. Similarly to Example 5, tbe results are shown in Table 3.

It will be appreciated from Table 3 that in spite of the packing of the column with the COAp at the high pressure, the column gave the same chromatogram as the chromatograms obtained in Examples 5 and 6 and the COAp was excellent in pressure resistance.

Example 9:

A fractionating column having an inner diameter of 21 mm and a length of 250 mm was packed at a pressure of 80 kg/cm²-G with the COAp obtained in accordance with Production Example 5, thereby giving a density of 0.62 g/cm³. The resultant HPLC column was thereafter operated in a similar manner as in Examples 1 and 2 except that the standard sample was injected in an amount of 70 μℓ. Similarly to Example 5, the data of a chromatogram obtained by the above operation are shown in Table 3. It is understood from the results of Table 3 that the column of this invention can give the same results as usual HPLC and can also be used successfully for fractionation.

Example 10:

An HPLC column having an inner diameter of 7.6 mm and a length of 100 mm was packed at a pressure of 80 kg/cm²-G with the COAp obtained in accordance with Production Example 7, thereby giving a density of 0.58 g/cm³. The subsequent operation was conducted in the same manner as in Examples 1 and 2 except that the pressure was controlled at 50 kg/cm²-G during the development to give a flow rate of 3.4 mℓ/min. Similarly to Example 5, the data of a chromatogram obtained by the above operation are shown in Table 3. As can be understood from Table 3, the individual four peaks are clearly separated although the separation was conducted in a short time.

Table 3

| | | Kind of nucleic acid | | | |
|---|---|---|---|---|---|
| | | Tryptophan | BSA | Lysozyme | Cytochrome C |
| Ex. 1 | Retention time (min) and Peak half-value width (min) | 3.85(0.26) | 9.76(0.50) | 11.48(0.54) | 17.17(0.66) |
| | Retention time (min) and Peak half-value width (min) in 50th operation | 3.89(0.30) | 11.60(0.60) | 13.80(0.57) | 18.20(0.68) |
| Ex. 2 | Retention time (min) and Peak half-value width (min) | 4.02(0.32) | 12.20(0.62) | 13.66(0.55) | 19.02(0.56) |
| | Retention time (min) and Peak half-value width (min) in 50th operation | 4.05(0.34) | 11.96(0.65) | 13.69(0.58) | 19.10(0.62) |
| Ex. 5 | Retention time (min) and Peak half-value width (min) | 3.90(0.31) | 12.10(0.61) | 13.28(0.58) | 18.53(0.62) |
| | Retention time (min) and Peak half-value width (min) in 50th operation | 3.94(0.33) | 11.88(0.64) | 13.26(0.61) | 18.68(0.65) |
| Ex. 6 | Retention time (min) and Peak half-value width (min) | 3.76(0.24) | 12.29(0.48) | 14.02(0.50) | 19.12(0.45) |
| | Retention time (min) and Peak half-value width (min) in 50th operation | 3.80(0.28) | 12.25(0.50) | 14.05(0.52) | 19.12(0.46) |
| Ex. 7 | Retention time (min) and Peak half-value width (min) | 3.76(0.24) | 12.29(0.48) | 14.02(0.50) | 19.12(0.45) |
| | Retention time (min) and Peak half-value width (min) in 300th operation | 3.89(0.38) | 11.98(0.58) | 14.08(0.59) | 19.25(0.53) |
| Ex. 8 | Retention time (min) and Peak half-value width (min) | 3.78(0.29) | 12.10(0.50) | 14.11(0.51) | 18.89(0.48) |
| | Retention time (min) and Peak half-value width (min) in 50th operation | 3.91(0.32) | 11.98(0.55) | 14.09(0.54) | 19.06(0.51) |
| Ex. 9 | Retention time (min) and Peak half-value width (min) | 7.75(0.28) | 12.52(0.46) | 14.70(0.32) | 20.07(0.36) |
| | Retention time (min) and Peak half-value width (min) in 50th operation | 7.78(0.30) | 12.50(0.41) | 14.74(0.33) | 20.22(0.36) |
| Ex. 10 | Retention time (min) and Peak half-value width (min) | 1.22(0.11) | 6.35(0.24) | 8.52(0.25) | 12.28(0.31) |
| | Retention time (min) and Peak half-value width (min) in 50th operation | 1.23(0.12) | 6.34(0.24) | 8.52(0.26) | 12.28(0.30) |
| Comp. Ex. 2 | Retention time (min) and Peak half-value width (min) | 4.20(0.83) | - ( - ) | 13.12(1.08) | 17.02(0.92) |
| | Retention time (min) and Peak half-value width (min) in 50th operation | Inoperative | Inoperative | Inoperative | Inoperative |

(Note)

1. In the above table, "BSA" stands for bovine serum albumin.

2. The values in parentheses indicate peak half-value widths.

EP 0 342 932 A1

Example 11:

The separation ability of the HPLC column, which was employed in Example 5, for a nucleic acid was evaluated using a carbonate salt as a developer.

Calf thymus deoxyribonucleic acid (DNA) (product of Sigma Chemical Company, U.S.A.) was used as a sample nucleic acid. The development was conducted in accordance with the linear concentration gradient technique, using distilled water and a 2M aqueous solution of ammonium bicarbonate (pH 7.8). The column was injected with 10.0 $\mu\ell$ of the above sample. Further, the developing pressure was controlled at 7.5 kg/cm$^2$-G to give a flow rate of 1 m$\ell$/min.

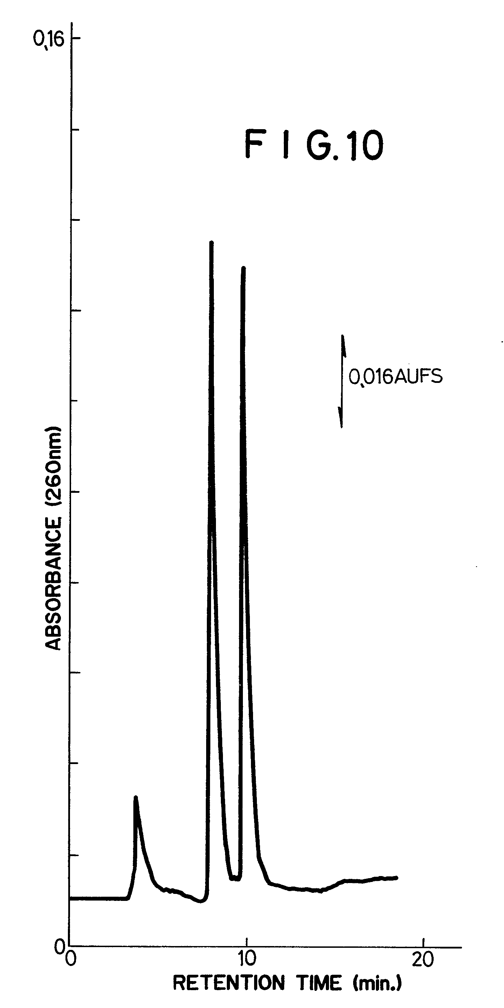

The detection of the nucleic acid was conducted by measuring the absorbance at 260 nm. A chromatogram obtained by the column is shown in FIG. 10. As will be observed in FIG. 10, two main peaks appeared. It can thus be understood that a portion of the nucleic acid, which had been subjected to a heat treatment and converted into a single-chain structure, was separated completely from the nucleic acid of the double-chain structure. In addition, the fractions corresponding to the respective peaks were separately added with ethanol to directly recover the nucleic acid as thread-like precipitates.

Example 12:

The column used in Example 6, whose separation ability had been evaluated with the standard sample, was operated 50 times in the same manner as in Example 11. After completion of the operation, its separation ability was evaluated again with the standard sample. Deterioration of the column was not observed at all.

Comparative Example 1:

Using the HAp obtained in accordance with Comparative Production Example 1, the separation of bovine serum albumin was conducted in exactly the same manner as in Examples 3 and 4. The results thus obtained are shown in FIG. 11.

The columns of Examples 3 and 4 showed excellent separation ability and adsorption and desorption performance. In contrast, as can be understood from FIG. 11, the HAp obtained in accordance with Comparative Production Example 1 and containing no carbonate groups is inferior in the recovered amount.

Comparative Example 2:

A column having an inner diameter of 7.6 mm and a length of 100 mm was packed with the HAp obtained in accordance with Comparative Production Example 1. It was thereafter operated in the same manner as in Example 4 to separate the standard sample. Incidentally, the packing density was 0.28 g/cm$^3$. In order to give a flow rate at 1 m$\ell$/min, the pressure was controlled at 1 kg/cm$^2$-G. This pressure was however low for HPLC, so that the operation encountered difficulties.

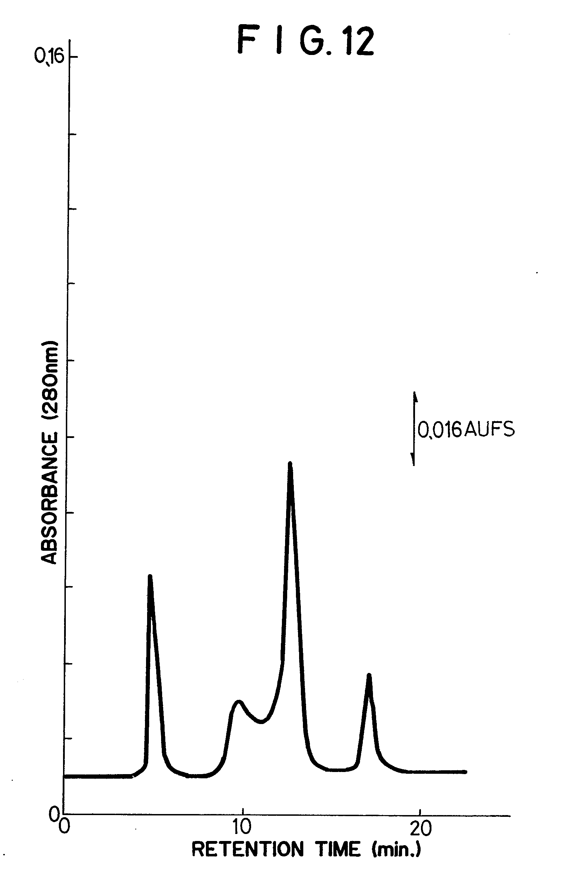

A chromatogram obtained by the above operation is shown in FIG. 12. As can be understood from a comparison between FIG. 12 and FIGS. 6 and 7, the column packed with the HAp obtained in accordance with the conventional process showed broad peaks in general.

Comparative Example 3:

A column having an inner diameter of 7.6 mm and a length of 100 mm was packed under a packing pressure of 15 kg/cm$^2$-G with the HAp obtained in accordance with Comparative Production Example 1. The packing pressure caused the crystals to collapse inside the column, so that clogging took place and development was infeasible.

Comparative Example 4:

A column having an inner diameter of 7.6 mm and a length of 100 mm was packed with the HAp obtained in accordance with Comparative Production Example 1. The column was then operated in a similar manner as in Example 12. The column pressure was however increased in the fifth operation, thereby making it impossible to conduct any further development.

**Claims**

1. A solid support for liquid chromatography consisting essentially of a hydroxyapatite containing carbonate groups in a proportion of 0.5-5.0 wt.% calculated as $CO_3$.

2. The solid support according to claim 1, wherein the hydroxyapatite has a specific surface area not greater than 50 m$^2$/g.

3. The solid support according to claim 1 or claim 2, wherein the hydroxyapatite contains Ca and P atoms at a Ca/P atom ratio of 1.60-1.70.

4. The solid support according to claim 1, 2 or 3, wherein the hydroxyapatite is an aggregate of hexagonal prismatic crystals.

5. A column for liquid chromatography, comprising the solid support according to any of claims 1 to 4 packed therein.

6. A column for liquid chromatography, comprising the solid support according to any of claims 1 to 4 packed at a density of at least 0.5 g/cm$^3$ therein.

7. A method of liquid chromatography wherein substances to be purified or separated are passed into a column according to claim 5 or claim 6.

8. A method according to claim 7, wherein elution is conducted using an eluant containing carbonate groups.

# F I G.1

EP 0 342 932 A1

SAMPLE

| | |
|---|---|
| TARGET | Cu |
| FILTER | Ni |
| VOLTAGE | 30 KV |
| CURRENT | 15 mA |
| COUNT FULL SCALE | 2000 c/s |
| TIME CONSTANT | 1 sec |
| SCANNING SPEED | 2°/min. |
| CHART SPEED | 20mm/min. |
| DIVERGENCY | 1° |
| RECEIVING SLIT | 0.3mm |

INTENSITY

DIFFRACTION ANGLE (2θ)

# F I G.2

TRANSMITTANCE

WAVE NUMBER (cm⁻¹)

# F I G.4

TRANSMITTANCE

WAVE NUMBER (cm⁻¹)

# F I G.3

EP 0 342 932 A1

INTENSITY

DIFFRACTION ANGLE (2θ)

SAMPLE

| | |
|---|---|
| TARGET | Cu |
| FILTER | Ni |
| VOLTAGE | 30 KV |
| CURRENT | 15mA |
| COUNT FULL SCALE | 2000 c/s |
| TIME CONSTANT | 1 sec |
| SCANNING SPEED | 2°/min. |
| CHART SPEED | 20mm/min. |
| DIVERGENCY | 1° |
| RECEIVING SLIT | 0.3mm |

EP 0 342 932 A1

# F I G.5

# F I G.6

# F I G.7

FIG.8

FIG.9

F I G.10

FIG.11

# F I G. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,Y | CHEMICAL ABSTRACTS, vol. 108, 13th June 1988, page 130, abstract no. 206848q, Columbus, Ohio, US; H. MONMA et al.: "Hydraulicity of the dicalcium phosphate-calcium carbonate mixture and properties of the resulting porous apatite", NIPPON SERAMIKKUSU KYOKAI GAKUJUTSU RONBUNSHI 1988, 96(2), 217-20 * Abstract * | 1 | B 01 J 20/04<br>B 01 D 15/08 |
| A | IDEM<br>--- | 5 | |
| Y | EP-A-2 537 558 (MITSUI TOATSU CHEMICALS INC.)<br>* Page 1, lines 20-29; pages 9,10,14; page 16, lines 22-31 * | 1 | |
| A | ---<br>--- | 3 | |
| A | CHEMICAL ABSTRACTS, vol. 105, no. 18, November 1986, page 149, abstract no. 155559z, Columbus, Ohio, US; & JP-A-61 151 011 (CENTRAL GLASS CO. LTD) 09-07-1986<br>* Abstract *<br>----- | 1,3 | TECHNICAL FIELDS SEARCHED (Int. Cl.4)<br><br>B 01 J<br>G 01 N<br>C 01 B |

The present search report has been drawn up for all claims

| Place of search | Date of completion of the search | Examiner |
|---|---|---|
| THE HAGUE | 19-07-1989 | WENDLING J.P. |

EPO FORM 1503 03.82 (P0401)